Europäisches Patentamt

**European Patent Office**

**Office européen des brevets**

(11) Publication number: **0 227 841**
**A1**

(12) **EUROPEAN PATENT APPLICATION**

published in accordance with Art. 158(3) EPC

(21) Application number: **86904361.2**

(22) Date of filing: **01.07.86**

Data of the international application taken as a basis:

(86) International application number: **PCT/JP 86/00338**

(87) International publication number: **WO 87/00311 (15.01.87 87/1)**

(51) Int. Cl.⁴: **G 05 B 19/18**

(30) Priority: **01.07.85 JP 144257/85**

(43) Date of publication of application: **08.07.87 Bulletin 87/28**

(84) Designated Contracting States: **DE FR GB**

(71) Applicant: **FANUC LTD, 3580, Shibokusa Aza-Komanba Oshino-mura, Minamitsuru-gun Yamanashi 401-05 (JP)**

(72) Inventor: **KISHI, Hajimu, Hinohirayamadai-Jutaku 1104 7-8, Asahigaoka, 6-chome Hino-shi Tokyo 191 (JP)**
Inventor: **MIZUNO, Tohru, Fanuc Hinoshataku 204 3-27, Tamadaira, Hino-shi Tokyo 191 (JP)**
Inventor: **ISHIKAWA, Haruyuki, 25, Daikyo-cho, Shinjuku-ku Tokyo 160 (JP)**

(74) Representative: **Billington, Lawrence Emlyn et al, HASELTINE LAKE & CO Hazlitt House 28 Southampton Buildings Chancery Lane, London WC2A 1AT (GB)**

(54) **SYSTEM FOR CONTROLLING ARTICULATED ROBOT.**

(57) A system for controlling articulated robot wherein a cycle which receives serial data from an external instruction device and a cycle which reversely converts the received serial data into correction data on each of the axes from orthogonal coordinates and distributes them, are executed in parallel by first and second operation units (CPU-a, CPU-b) in a robot control unit which is served with control target information on the articulated robot via a serial interface (11), in order to produce in real time a robot drive instruction that corresponds to said control target information maintaining a sufficiently short interpolation interval, and in order to control the operation of each of the axes.

# D E S C R I P T I O N

## CONTROL SYSTEM FOR ARTICULATED ROBOT

### Technical Field

The present invention relates to a control system for an articulated robot, and more particularly to a system for controlling an arc welding robot having a sensory function.

### Background Art

Robots having a sensory function such as a visual sensor are capable of feeding back control target information with respect to a pre-programmed robot driving command for correcting the robot driving command. Those robots are effective to increase the controllability of various industrial robots such as an arc welding robot, an assembling robot, and the like.

For example, an industrial TV camera is disposed as a visual sensor in the vicinity of a working position of a robot mechanism, and an image signal produced by the industrial TV camera is received and processed on a real-time basis by an external commmand device such as an image processing device or a sensor controller, including a computer. In such an application, control target information for an articulated robot is given to a robot controller through a serial interface. Generally, control target information for an articulated robot is such that a target position from the visual sensor is supplied as orthogonal coordinate data relating to the posture and

- 1 -

position of a robot arm. Therefore, the robot controller calculates positional corrective data for each axis dependent on the structure of the manipulator, from the orthogonal coordinate data.

Where the manipulator is of the orthogonal coordinate type, it is relatively easy to process, on a real-time basis, distributed pulses for each axis which have been corrected on the basis of the given target position. With an articulated robot having many articulatory joints, however, it is necessary to convert serial data received by the robot controller from orthogonal coordiate data back to corrective data for each axis and to distribute such corrected data. Conventional robot controllers composed of a single processor fail to process, in parallel, a reception cycle in the serial interface and a processing cycle for backward or reverse data conversion. Therefore, the accuracy of correction of a robot driving command with respect to control target information that has been fed back is generally limited by the data transfer ability of the serial interface. It is thus not possible to increase the accuracy of distributed pulses which are issued in real time, including the correction of a moving target position.

The present invention has been made in an effort to solve the above problems. It is an object of the present invention to provide a control system for an articulated robot, which is capable of increasing the track accuracy of command data for each axis and the accuracy of a response to correction, independently of the data transfer ability of a serial interface.

Disclosure of the Invention

There is provided according to the present invention a control system for an articulated robot wherein control target information for the articulated robot is supplied through a serial interface to a robot controller for providing corrective information with respect to a robot driving command issued from the robot controller, characterized by a first processing unit for receiving the control target information from said serial interface, a second processing unit for converting the received information to corrective information for each axis of said articulated robot, a work memory connected to the second processing unit for storing a corrected operation control program for said articulated robot, and a common memory accessible commonly by said first and second processing units, whereby a robot driving command with respect to said control target information can be issued on a real-time basis.

According to the present invention, more specifically, the robot controller of the articulated robot with many articulatory joints effects, in parallel, a cycle of receiving serial data from an external command device and cycles of converting the received serial data from orthogonal coordinate data back to corrective data for each axis and distributing the correcting data, so that operation control for each axis can be effected with a driving command at sufficiently short interpolation intervals.

Brief Description of the Drawings

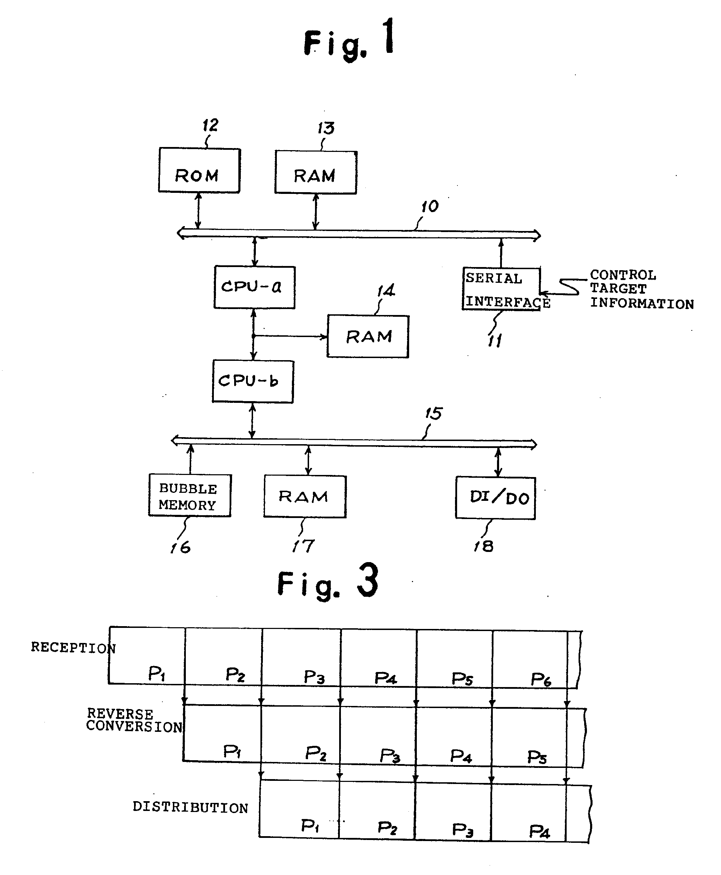

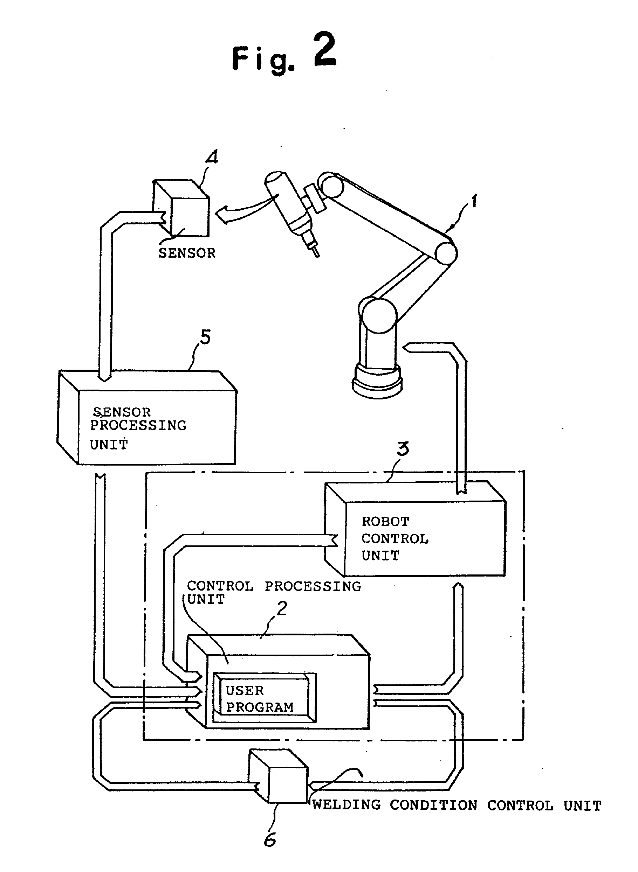

Fig. 1 is a block diagram of a robot control system for an articulated robot according to an embodiment of the present invention; Fig. 2 is a block diagram of a system arrangement of an arc welding robot; and Fig. 3 is an operation diagram showing cycles of data reception, reverse conversion, and distribution.

Best Mode for Carrying Out the Invention

An embodiment of the present invention will hereinafter be described in specific detail with reference to the drawings.

Fig. 2 shows an arrangement of a control system for an arc welding robot 1. The user can set a desired task program in a control processing unit 2, from which a robot driving command such as a torch posture command or a hand position command is read out for controlling a robot 1 through a robot control unit 3.

A visual sensor 4 such as an industrial TV camera serves to recognize the positional relationship, for example, between a workpiece to be processed by the arc welding robot 1 and a welding torch. Although not shown, workpieces are repeatedly supplied to the robot 1 automatically, and welded according to the task program.

Generally, the configurations of the workpieces supplied to the robot 1 have different accuracies, and the workpieces are supplied to varying positions. Therefore, image information from the sensor 4 should be analyzed by a sensor processing unit 5 as three-dimensional data of a welding line for correcting a welding line which has been taught. More specifically, control target information from the sensor processing unit 5 is supplied as serial data to the control processing unit 2 in which the data is processed on a real-time basis into corrective information for the robot driving command. A control unit 6 serves to determine a welding condition from the intensity of a generated arc and the amount of a supplied wire. The control processing unit 2 determines the robot driving command based on the control target information, present position information from the robot control unit 3, and the welding condition information, and applies the robot driving command to the robot control unit 3. The robot control unit 3 issues driving signals as distributed pulses for five or six axes of a robot arm to control the torch for being positioned at an optimum angle and for movement along an optimum track.

Fig. 1 is a block diagram showing an arrangement of a robot controller which is a central part of the present invention. The control processing unit 2 and the robot control unit 3 are combined into a unitary assembly (as indicated by the dot-and-dash line in Fig. 2), which is connected to the sensor processing unit 5 by a serial link.

A CPU-a constructed as a microprocessor is connected to a data bus 10 for receiving control target information supplied from a sensor system via a serial interface 11. To the data bus 10, there are connected a ROM 12 storing a prescribed processing program and a RAM 13 serves as a work memory. A CPU-b is also a processing unit constructed as a microprocessos like the CPU-a, and is coupled to the CPU-a via a common memory 14 which can commonly be accessed by the CPU-a and the CPU-b. The CPU-b is connected to a data bus 15 to which there are connected a bubble memory 16 (which may be a RAM of a CMOS configuration) for storing a task program set by the user, a RAM 17 constituting a work memory, and a data input/output control unit 18.

Moving target position data received as control target information can be read by the CPU-b out of the common memory 14, and converted by the CPU-b back to corrective data for each axis of the articulated robot 1. Based on the corrective data, a corrected operation control program is produced according to the task program which is stored in the bubble memory 16 as taught data for a standard workpiece. Operation of the robot 1 is controlled according to the corrected operation control program.

The robot controller thus constructed and operated is capable of processing, in parallel, a cycle of receiving, with the first CPU-a, the control target information which is analyzed in orthogonal coordiates and supplied from the sensor system, and cycles of converting, with the second CPU-b, the received serial data from the orthogonal coordinate data back to corrective data for each axis and of distributing the corrective data with the robot control unit 3. More specifically, the reception and the reverse coversion can be processed in parallel by the processing units which are independent of each other as shown in Fig. 3. By processing three tasks in parallel, including the task of distributing the data according to the corrected driving command, the processing time per cycle can be shortened to a desired level. Therefore, the interval of data interpolation for the driving command can be determined by the robot controller, independently of the scanning cycle of image information and the image processing capability of the sensor 4. The arrangement of the invention is thus effective in increasing the track accuracy of a welding robot and the accuracy of a response to corrective information.

While the present invention has been described in the above embodiment with reference to a control system for an articulated robot to control an arc welding torch, the present invention is not limited to the aforesaid embodiment. The tool mounted on the wrist of the robot may be a gripper or any of various other components. Where a welding robot is employed, image information slightly ahead of the portion being welded is supplied as moving target position data, and converted back to the coordinate system of the articulated robot for providing corrective information. However, corrective information for an operation program in an articulated robot is generally not limited to information from a visual sensor, but may be information issued from another sensory function such as an audio sensor. The present invention is also applicable, for the same advantages as described above, to a control system which is supplied with target control system from an external command device via a serial interface, rather than with a signal fed back from the sensor system.

Industrial Applicability

According to the present invention, a control system for an articulated robot has a processing capability independent of the ability to receive data transferred via a serial interface, so that the interval of interpolation can be reduced. Command data for each axis is improved with respect its track accuracy and its accuracy of a response to corrective information.

CLAIMS

(1) A control system for an articulated robot wherein control target information for the articulated robot is supplied through a serial interface to a robot controller for providing corrective information with respect to a robot driving command issued from the robot controller, comprising:

a first processing unit for receiving the control target information from said serial interface;

a second processing unit for converting the received information to corrective information for each axis of said articulated robot;

a work memory connected to the second processing unit for storing a corrected operation control program for said articulated robot; and

a common memory accessible commonly by said first and second processing units.

(2) A control system according to claim (1), wherein said first processing unit receives serial data supplied as the control target information from a sensor system.

(3) A control system according to claim (2), wherein said second processing unit has a function to convert moving target position data received as the control target information back to corrective data for each axis of said articulated robot.

(4) A control system according to claim (3), wherein said work memory stores an operation control program for an arc welding robot.

# Fig. 1

```
┌─────┐          ┌─────┐
│ ROM │12        │ RAM │13
└──┬──┘          └──┬──┘
   │                │                        10
═══╪════════════════╪═══════════════════════════════════╗
   │                │                            │
┌──┴──┐          ┌─────┐                    ┌──────────┐  CONTROL
│CPU-a│          │ RAM │14                  │  SERIAL  │← TARGET
└──┬──┘          └─────┘                    │INTERFACE │  INFORMATION
   │                                        └────┬─────┘
┌──┴──┐                                          11
│CPU-b│
└──┬──┘                                          15
═══╪═══════════════════════════════════════════════════╗
   │                    │                        │
┌──┴─────┐          ┌─────┐                 ┌──────┐
│ BUBBLE │          │ RAM │                 │DI/DO │
│ MEMORY │          └─────┘                 └──────┘
└────────┘            17                       18
   16
```

# Fig. 3

| RECEPTION | $P_1$ | $P_2$ | $P_3$ | $P_4$ | $P_5$ | $P_6$ | |
|---|---|---|---|---|---|---|---|
| REVERSE CONVERSION | | $P_1$ | $P_2$ | $P_3$ | $P_4$ | $P_5$ | |
| DISTRIBUTION | | | $P_1$ | $P_2$ | $P_3$ | $P_4$ | |

# Fig. 2

SENSOR

SENSOR
PROCESSING
UNIT

ROBOT
CONTROL
UNIT

CONTROL PROCESSING
UNIT

USER
PROGRAM

WELDING CONDITION CONTROL UNIT

# INTERNATIONAL SEARCH REPORT    0227841

International Application No.    PCT/JP86/00338

## I. CLASSIFICATION OF SUBJECT MATTER (if several classification symbols apply, indicate all) 3

According to International Patent Classification (IPC) or to both National Classification and IPC

Int.Cl$^4$    G05B19/18

## II. FIELDS SEARCHED

### Minimum Documentation Searched 4

| Classification System | Classification Symbols |
|---|---|
| IPC | G05B19/18 - 19/42, G05B15/00-15/02 |

### Documentation Searched other than Minimum Documentation to the Extent that such Documents are Included in the Fields Searched 5

| | |
|---|---|
| Jitsuyo Shinan Koho | 1926 - 1986 |
| Kokai Jitsuyo Shinan Koho | 1971 - 1986 |

## III. DOCUMENTS CONSIDERED TO BE RELEVANT 14

| Category* | Citation of Document, 16 with indication, where appropriate, of the relevant passages 17 | Relevant to Claim No. 18 |
|---|---|---|
| Y | JP, U, 58-169987, (Omron Tateisi Electronics Co.), 12 November 1983, (12. 11. 83), Figs. 1 and 2, (Family: none) | 1 - 4 |
| Y | JP, A, 56-9804, (Hitachi, Ltd.), 31 January 1981 (31. 01. 81), P.2, lower right column, line 18 to p.3, upper left column, line 2 (Family: none) | 1 - 4 |
| Y | JP, B2, 56-10665, (Hitachi, Ltd.), 10 March 1981, (10. 03. 81), P.1, right column, lines 25 to 35, (Family: none) | 1 - 4 |
| Y | JP, A, 53-29480, (Mitsubishi Electric Corporation), 18 March 1978, (18. 03. 78), P.2, upper right column, lines 8 to 13, (Family: none) | 1 - 4 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| September 16, 1986 (16.09.86) | September 29, 1986 (29.09.86) |

| International Searching Authority 1 | Signature of Authorized Officer 20 |
|---|---|
| Japanese Patent Office | |

Form PCT/ISA/210 (second sheet) (October 1981)